# EUROPEAN PATENT SPECIFICATION

(11) **EP 4 011 966 B1**
(45) Date of publication and mention of the grant of the patent: **04.11.2026**
(21) Application number: 21863089.5
(22) Date of filing: 26.05.2021
(51) Int. Cl.: C08L 25/12, C08L 51/04, C08L 77/00, C08K 3/013, B29C 48/08

(54) **THERMOPLASTIC RESIN COMPOSITION AND MOLDED PRODUCT THEREOF**
THERMOPLASTISCHE HARZZUSAMMENSETZUNG UND FORMARTIKEL DARAUS
COMPOSITION DE RÉSINE THERMOPLASTIQUE ET PRODUIT MOULÉ ASSOCIÉ

(30) Priority: 22.09.2020 KR 20200122542; 18.05.2021 KR 20210064033
(43) Date of publication of application: 15.06.2022
(73) Proprietor: LG CHEM, LTD., Seoul 07336 (KR)
(72) Inventor: JOE, Wangrae, Daejeon 34122 (KR); SUNG, Daeun, Daejeon 34122 (KR); KIM, Tae Hoon, Daejeon 34122 (KR); PARK, Chun Ho, Daejeon 34122 (KR); AN, Yong Hee, Daejeon 34122 (KR); JANG, Jeongmin, Daejeon 34122 (KR)
(74) Representative: Goddar, Heinz J.
(86) International application number: PCT/KR2021/006523
(87) International publication number: WO 2022/065625

(56) References cited:
- EP-A1- 4 015 576
- KR-A- 20130 075 812
- KR-A- 20150 047 991
- KR-A- 20150 050 372
- KR-A- 20160 057 601
- KR-A- 20200 049 604
- KR-B1- 101 534 962

## Description

### [Technical Field]

The present invention relates to a thermoplastic resin composition and a molded article including the same. More particularly, the present invention relates to a thermoplastic resin composition that has excellent processability at a low temperature of less than 200 °C compared to conventional ASA resins and thus has no surface defects, such as flow marks or peeling, during co-extrusion with a PVC resin; enables low energy consumption; has excellent processing stability due to a small change in viscosity even with a change in extrusion RPM; and has excellent heat resistance, and a molded article including the thermoplastic resin composition.

### [Background Art]

Acrylonitrile-styrene-acrylate copolymers (hereinafter referred to as "ASA resins") have good weather resistance, aging resistance, chemical resistance, rigidity, impact resistance, and processability, and are widely used in various fields such as automobiles, miscellaneous goods, and construction materials due to broad applicability thereof.

In particular, in the field of construction materials, ASA resins are widely used for PVC co-extrusion, and specific uses thereof include window profiles, deck boards, roofing, siding, and the like.

In the case of a conventional ASA resin, extrusion or injection processing is generally performed at a processing temperature of 200 to 240 °C. On the other hand, in the case of a PVC resin, there is a limitation in that the PVC resin must be co-extruded at a low temperature of less than 200 °C due to the problem that the PVC resin is easily carbonized at a high temperature of 200 °C or higher. However, since the viscosity of an ASA resin rapidly increases at a low temperature of less than 200 °C, a PVC resin layer is not properly covered with an ASA resin layer when the ASA resin is co-extruded with a PVC resin, causing surface defects such as generation of flow marks and peeling (not partially covered with the ASA resin). In addition, there is a disadvantage in that the viscosity of an ASA resin rapidly changes according to change in the RPM of an extruder, and a processing window is narrow.

Problems such as flow marks and peeling can be solved by increasing the temperature of an extruder die or an extruder barrel, or by increasing the extrusion RPM of an ASA resin to control shear heating of the ASA resin. However, when an extrusion temperature is increased, a large amount of energy is required. In addition, when the RPM of an ASA resin is increased, torque applied to an extruder is increased, thereby increasing a load applied to the machine.

Therefore, it is necessary to develop a resin that has no surface defects, such as flow marks or peeling, during co-extrusion with a PVC resin due to low viscosity even at low processing temperature, enables low energy consumption, and has excellent economics due to easy co-extrusion with a PVC resin.

### [Related Art Documents]

### [Patent Documents]

### KR 2009-0095764 A

KR 20150050372 A discloses a thermoplastic resin composition comprising 24 wt.% of an acrylate-aromatic vinyl compound-vinyl cyanide compound graft copolymer having an average particle size of 180 nm; 20 wt.% of an acrylate-aromatic vinyl compound-vinyl cyanide compound graft copolymer having an average particle size of 320 nm; 44 wt.% of an alpha-methylstyrene-styrene-acrylonitrile copolymer resin having a weight average molecular weight of 160,000 g/mol; and 15 wt.% of a styrene-acrylonitrile copolymer resin having a weight average molecular weight of 120,000 g/mol.

KR 20160057601 A discloses a thermoplastic resin composition comprising 35 wt.% of a first graft copolymer which is a copolymer having 50 wt.% of butyl acrylate rubber having an average particle size of 130 nm as a core and in which 30 wt.% of styrene and 20 wt.% of acrylonitrile are graft copolymerized.

KR 101534962 B1 discloses a thermoplastic resin composition comprising 0.1 to 20 parts by weight of a polyamide-based thermoplastic resin.

EP 4 015 576 A1 discloses a thermoplastic resin composition comprising 10 to 70% by weight of a graft copolymer (A) comprising an acrylate-aromatic vinyl compound-vinyl cyanide compound graft copolymer (A-1) containing acrylate rubber having an average particle diameter of 50 to 150 nm and an acrylate-aromatic vinyl compound-vinyl cyanide compound graft copolymer (A-2) containing acrylate rubber having an average particle diameter of 300 to 600 nm; and 30 to 90% by weight of a non-grafted copolymer (B) comprising a high molecular weight aromatic vinyl compound-vinyl cyanide compound copolymer (B-1) having a weight average molecular weight of 160,000 to 200,000 g/mol and a low molecular weight aromatic vinyl compound-vinyl cyanide compound copolymer (B-2) having a weight average molecular weight of 80,000 g/mol or more and less than 160,000 g/mol.

### [Disclosure]

### [Technical Problem]

Therefore, the present invention has been made in view of the above problems, and it is one object of the present invention to provide a thermoplastic resin composition that has excellent processability at a low temperature of less than 200 °C compared to conventional ASA resins and thus has no surface defects, such as flow marks or peeling, during co-extrusion with a PVC resin; enables low energy consumption; has excellent processing stability due to little change in viscosity despite a change in extrusion RPM; and has excellent heat resistance, and a molded article including the thermoplastic resin composition.

The above and other objects can be accomplished by the present invention described below.

### [Technical Solution]

In accordance with one aspect of the present invention, provided is a thermoplastic resin composition including 10 to 70 % by weight of a graft copolymer (A) including an acrylate-aromatic vinyl compound-vinyl cyanide compound graft copolymer (A-1) containing acrylate rubber having an average particle diameter of 50 to 150 nm and an acrylate-aromatic vinyl compound-vinyl cyanide compound graft copolymer (A-2) containing acrylate rubber having an average particle diameter of 300 to 600 nm; and 30 to 90 % by weight of a non-grafted copolymer (B) including a high molecular weight aromatic vinyl compound-vinyl cyanide compound copolymer (B-1) having a weight average molecular weight of 160,000 to 200,000 g/mol, wherein the aromatic vinyl compound of the high molecular weight aromatic vinyl compound-vinyl cyanide compound copolymer (B-1) includes styrene; and a low molecular weight aromatic vinyl compound-vinyl cyanide compound copolymer (B-2) having a weight average molecular weight of 80,000 g/mol or more and less than 160,000 g/mol, wherein the aromatic vinyl compound of the high molecular weight aromatic vinyl compound-vinyl cyanide compound copolymer (B-2) includes styrene; wherein, when extrusion RPM is changed from 20 to 60 under conditions of a barrel temperature of 190 °C and a die temperature of 200 °C, a pressure gradient of the thermoplastic resin composition applied to a single screw extruder for sheet molding is 130 or less.

In accordance with another aspect of the present invention, provided is a thermoplastic resin composition including 10 to 70 % by weight of a graft copolymer (A) including an acrylate-aromatic vinyl compound-vinyl cyanide compound graft copolymer (A-1) containing acrylate rubber having an average particle diameter of 50 to 150 nm and an acrylate-aromatic vinyl compound-vinyl cyanide compound graft copolymer (A-2) containing acrylate rubber having an average particle diameter of 300 to 600 nm; and 30 to 90 % by weight of a non-grafted copolymer (B) including a high molecular weight aromatic vinyl compound-vinyl cyanide compound copolymer (B-1) having a weight average molecular weight of 160,000 to 200,000 g/mol, wherein the aromatic vinyl compound of the high molecular weight aromatic vinyl compound-vinyl cyanide compound copolymer (B-1) includes styrene; and a low molecular weight aromatic vinyl compound-vinyl cyanide compound copolymer (B-2) having a weight average molecular weight of 80,000 g/mol or more and less than 160,000 g/mol, , wherein the aromatic vinyl compound of the high molecular weight aromatic vinyl compound-vinyl cyanide compound copolymer (B-2) includes styrene; wherein, when the thermoplastic resin composition is discharged through a T-die for 1 minute and 30 seconds under conditions of a barrel temperature of 190 °C, a die temperature of 200 °C, and an extrusion RPM of 50, a discharge rate calculated based on a discharge amount of the thermoplastic resin composition is 18 g/min or more.

In accordance with still another aspect of the present invention, provided is a thermoplastic resin composition including 100 parts by weight of a base resin including 10 to 70 % by weight of a graft copolymer (A) including an acrylate-aromatic vinyl compound-vinyl cyanide compound graft copolymer (A-1) containing acrylate rubber having an average particle diameter of 50 to 150 nm and an acrylate-aromatic vinyl compound-vinyl cyanide compound graft copolymer (A-2) containing acrylate rubber having an average particle diameter of 300 to 600 nm; and 30 to 90 % by weight of a non-grafted copolymer (B) including a high molecular weight aromatic vinyl compound-vinyl cyanide compound copolymer (B-1) having a weight average molecular weight of 160,000 to 200,000 g/mol, wherein the aromatic vinyl compound of the high molecular weight aromatic vinyl compound-vinyl cyanide compound copolymer (B-1) includes styrene; and a low molecular weight aromatic vinyl compound-vinyl cyanide compound copolymer (B-2) having a weight average molecular weight of 80,000 g/mol or more and less than 160,000 g/mol, , wherein the aromatic vinyl compound of the high molecular weight aromatic vinyl compound-vinyl cyanide compound copolymer (B-2) includes styrene, 0.1 to 10 parts by weight of a polyamide resin, and 0.1 to 5 parts by weight of an inorganic pigment.

The thermoplastic resin composition may not include a thermoplastic resin having a glass transition temperature of 125 °C or higher.

In accordance with yet another aspect of the present invention, provided is a molded article including the thermoplastic resin composition of the present invention.

Further embodiments are disclosed in the dependent claims.

### [Advantageous effects]

The present invention can provide a thermoplastic resin composition that has excellent processability at a low temperature of less than 200 °C compared to conventional ASA resins and thus has no surface defects, such as flow marks or peeling, during co-extrusion with a PVC resin; enables low energy consumption; has excellent processing stability due to little change in viscosity even despite a change in extrusion RPM; and has excellent heat resistance, and a molded article including the thermoplastic resin composition.

### [Description of Drawings]

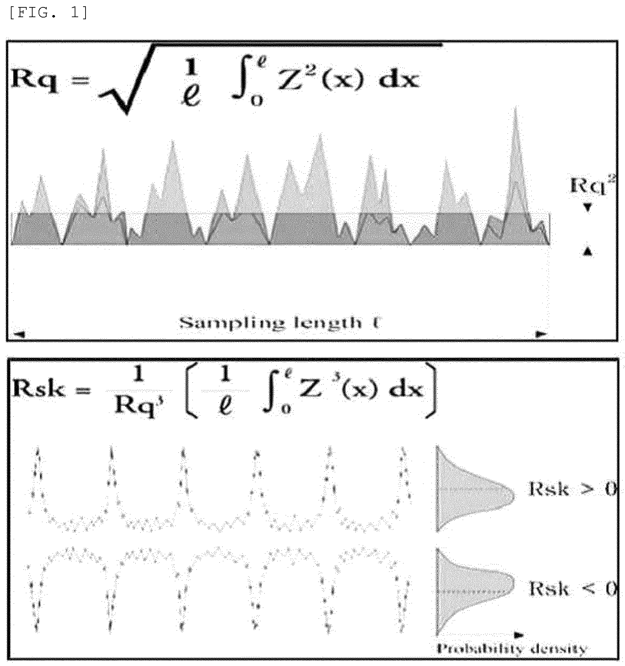

FIG. 1 schematically shows the definition, calculation method, and meaning of skewness (Rsk) according to the present invention. The skewness (Rsk) is defined as a characteristic value representing the direction and degree of asymmetry with respect to an average value in the histogram of a statistical group, and through the skewness (Rsk), it is possible to evaluate which of peaks and valleys forms most of a surface. In particular, in the upper image of FIG. 1, an equation for obtaining a root mean square deviation (Rq) and a graph showing the meaning thereof are shown. Z denotes the height of a peak, and ℓ denotes an average section length (sampling length). In addition, in the lower image of FIG. 1, an equation for obtaining skewness (Rsk) and a graph showing the meaning thereof are shown. As a skewness (Rsk) value is greater than 0 and increases, the distribution of peaks relative to a mean line increases. As a skewness (Rsk) value is less than 0 and decreases, the distribution of valleys relative to a mean line increases. According to the present invention, when a skewness (Rsk) is adjusted within a predetermined range, a product with a surface exhibiting a rough feeling without a plastic feel may be implemented.

### [Rest mode]

Hereinafter, a thermoplastic resin composition and a molded article including the same according to the present invention will be described in detail.

The present inventors confirmed that, when two types of acrylate-aromatic vinyl compound-vinyl cyanide compound graft copolymers each containing rubber particles having different average particle diameters were mixed in a predetermined ratio, a predetermined high molecular weight aromatic vinyl polymer excluding a heat-resistant aromatic vinyl polymer and a predetermined low molecular weight aromatic vinyl polymer were added thereto within a predetermined content range, and the pressure gradient or discharge rate of a thermoplastic resin composition applied to an extruder was adjusted to a predetermined value, no surface defects, such as flow marks or peeling, occurred at a low temperature of less than 200 °C even during co-extrusion with a PVC resin, energy consumption was reduced, and heat resistance was excellent. Based on these results, the present inventors conducted further studies to complete the present invention.

The thermoplastic resin composition of the present invention includes 10 to 70 % by weight of a graft copolymer (A) including an acrylate-aromatic vinyl compound-vinyl cyanide compound graft copolymer (A-1) containing acrylate rubber having an average particle diameter of 50 to 150 nm and an acrylate-aromatic vinyl compound-vinyl cyanide compound graft copolymer (A-2) containing acrylate rubber having an average particle diameter of 300 to 600 nm; and 30 to 90 % by weight of a non-grafted copolymer (B) including a high molecular weight aromatic vinyl compound-vinyl cyanide compound copolymer (B-1) having a weight average molecular weight of 160,000 to 200,000 g/mol, wherein the aromatic vinyl compound of the high molecular weight aromatic vinyl compound-vinyl cyanide compound copolymer (B-1) includes styrene; and a low molecular weight aromatic vinyl compound-vinyl cyanide compound copolymer (B-2) having a weight average molecular weight of 80,000 g/mol or more and less than 160,000 g/mol, wherein the aromatic vinyl compound of the high molecular weight aromatic vinyl compound-vinyl cyanide compound copolymer (B-2) includes styrene. In this case, when extrusion RPM is changed from 20 to 60 under conditions of a barrel temperature of 190 °C and a die temperature of 200 °C, the pressure gradient of the thermoplastic resin composition applied to a single screw extruder for sheet molding is 130 or less. In this case, the present invention has an advantage of providing a thermoplastic resin composition that has excellent processability at a low temperature of less than 200 °C compared to conventional ASA resins and thus has no surface defects, such as flow marks or peeling, during co-extrusion with a PVC resin; has excellent economics due to low energy consumption and a low content of an ASA resin; and has excellent heat resistance, and a molded article including the thermoplastic resin composition.

In addition, the thermoplastic resin composition of the present invention includes 10 to 70 % by weight of a graft copolymer (A) including an acrylate-aromatic vinyl compound-vinyl cyanide compound graft copolymer (A-1) containing acrylate rubber having an average particle diameter of 50 to 150 nm and an acrylate-aromatic vinyl compound-vinyl cyanide compound graft copolymer (A-2) containing acrylate rubber having an average particle diameter of 300 to 600 nm; and 30 to 90 % by weight of a non-grafted copolymer (B) including a high molecular weight aromatic vinyl compound-vinyl cyanide compound copolymer (B-1) having a weight average molecular weight of 160,000 to 200,000 g/mol, wherein the aromatic vinyl compound of the high molecular weight aromatic vinyl compound-vinyl cyanide compound copolymer (B-1) includes styrene; and a low molecular weight aromatic vinyl compound-vinyl cyanide compound copolymer (B-2) having a weight average molecular weight of 80,000 g/mol or more and less than 160,000 g/mol, wherein the aromatic vinyl compound of the high molecular weight aromatic vinyl compound-vinyl cyanide compound copolymer (B-2) includes styrene. In this case, when the thermoplastic resin composition is discharged through a T-die for 1 minute and 30 seconds under conditions of a barrel temperature of 190 °C, a die temperature of 200 °C, and an extrusion RPM of 50, a discharge rate calculated based on the discharge amount of the thermoplastic resin composition is 18 g/min or more. In the case of the thermoplastic resin composition of the present invention and a molded article including the same, compared to a conventional ASA resin, processability is excellent at a low temperature of less than 200 °C, and thus no surface defects, such as flow marks or peeling, occur even during co-extrusion with a PVC resin. In addition, energy consumption is reduced. In addition, due to excellent processing stability, a PVC resin may be effectively covered without significant change in viscosity in a wide processing window. In addition, heat resistance is excellent.

In addition, the thermoplastic resin composition of the present invention includes 100 parts by weight of a base resin including 10 to 70 % by weight of a graft copolymer (A) including an acrylate-aromatic vinyl compound-vinyl cyanide compound graft copolymer (A-1) containing acrylate rubber having an average particle diameter of 50 to 150 nm and an acrylate-aromatic vinyl compound-vinyl cyanide compound graft copolymer (A-2) containing acrylate rubber having an average particle diameter of 300 to 600 nm; and 30 to 90 % by weight of a non-grafted copolymer (B) including a high molecular weight aromatic vinyl compound-vinyl cyanide compound copolymer (B-1) having a weight average molecular weight of 160,000 to 200,000 g/mol, wherein the aromatic vinyl compound of the high molecular weight aromatic vinyl compound-vinyl cyanide compound copolymer (B-1) includes styrene, and a low molecular weight aromatic vinyl compound-vinyl cyanide compound copolymer (B-2) having a weight average molecular weight of 80,000 g/mol or more and less than 160,000 g/mol, wherein the aromatic vinyl compound of the high molecular weight aromatic vinyl compound-vinyl cyanide compound copolymer (B-2) includes styrene, 0.1 to 10 parts by weight of a polyamide resin, and 0.1 to 5 parts by weight of an inorganic pigment. In the case of the thermoplastic resin composition of the present invention and a molded article including the same, compared to a conventional ASA resin, processability is excellent at a low temperature of less than 200 °C, and thus no surface defects, such as flow marks or peeling, occur even during co-extrusion with a PVC resin. In addition, due to excellent processing stability, a PVC resin may be effectively covered without significant change in viscosity in a wide processing window. In addition, heat resistance is excellent.

In this specification, unless defined otherwise, molding temperature means the highest temperature among temperatures set in the temperature control zone of a barrel in an extrusion or injection device (or extrusion or injection process). In general, molding temperature refers to the temperature of a zone adjacent to a die in a barrel.

In this specification, unless defined otherwise, barrel temperature means molding temperature, and a barrel part means a zone, the temperature of which is directly controlled by a heating device in a barrel. In general, a barrel part consists of a plurality of temperature control zones without being limited thereto. The temperature of the barrel part is sequentially set from a temperature control zone or the first temperature control zone adjacent to an inlet (hopper) for injecting a thermoplastic resin composition to a temperature control zone or the last temperature control zone adjacent to a die.

In this specification, unless defined otherwise, die temperature means temperature set in a die nozzle, i.e., the temperature of a die nozzle during extrusion or injection, and a die part means a zone, the temperature of which is directly controlled by a heat device in a die. In general, a die part consists of a plurality of temperature control zones without being limited thereto. The temperature of the die part is sequentially set from a temperature control zone or the first temperature control zone adjacent to a barrel to the last temperature control zone or a nozzle adjacent to a die.

Hereinafter, each component constituting the thermoplastic resin composition of the present invention will be described in detail.

### (A-1) Acrylate-aromatic vinyl compound-vinyl cyanide compound graft copolymer

The acrylate rubber of the graft copolymer (A-1) has an average particle diameter of 50 to 150 nm, preferably 50 to 130 nm, more preferably 100 to 130 nm. Within this range, a finally prepared thermoplastic resin composition may have excellent impact strength and appearance.

In this specification, average particle diameter may be measured by dynamic light scattering, and specifically, may be measured as an intensity value using a Nicomp 380 particle size analyzer (manufacturer: PSS) in a Gaussian mode. As a specific measurement example, a sample is prepared by diluting 0.1 g of latex (TSC: 35 to 50 wt%) 1,000 to 5,000 times with distilled water, i.e., a sample is diluted appropriately so as not to deviate significantly from an intensity setpoint of 300 kHz and is placed in a glass tube. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C; measurement wavelength: 632.8 nm; and channel width: 10 µsec.

For example, based on a total weight of the thermoplastic resin composition, the graft copolymer (A-1) may be included in an amount of 5 to 30 % by weight, preferably 10 to 25 % by weight, more preferably 10 to 20 % by weight. Within this range, processability may be excellent during co-extrusion, and mechanical properties such as impact strength, tensile strength, and elongation, appearance, and surface hardness may be excellent.

For example, the graft copolymer (A-1) may include 40 to 60 % by weight of acrylate rubber, 20 to 40 % by weight of an aromatic vinyl compound, and 10 to 20 % by weight of a vinyl cyanide compound. Within this range, appearance and surface hardness may be excellent.

As a preferred example, the graft copolymer (A-1) may include 45 to 55 % by weight of acrylate rubber, 30 to 40 % by weight of an aromatic vinyl compound, and 10 to 20 % by weight of a vinyl cyanide compound. Within this range, appearance and surface hardness may be excellent.

In this description, a polymer including a certain compound means a polymer prepared by polymerizing the compound, and a unit in the polymer is derived from the compound.

For example, the graft copolymer (A-1) may be prepared by emulsion polymerization. In this case, appearance and surface hardness may be excellent.

For example, the acrylate may include one or more selected from the group consisting of alkyl acrylates containing an alkyl group having 2 to 8 carbon atoms, preferably an alkyl acrylate containing an alkyl group having 4 to 8 carbon atoms, more preferably butyl acrylate or ethylhexyl acrylate.

For example, the aromatic vinyl compound may include one or more selected from the group consisting of styrene, α-methylstyrene, m-methylstyrene, p-methylstyrene, and p-tert-butylstyrene, preferably styrene.

For example, the vinyl cyanide compound may include one or more selected from the group consisting of acrylonitrile, methacrylonitrile, ethylacrylonitrile, and isopropylacrylonitrile, preferably acrylonitrile.

Emulsion graft polymerization methods commonly practiced in the art to which the present invention pertains may be used as the emulsion polymerization method of the present invention without particular limitation.

### (A-2) Acrylate-aromatic vinyl compound-vinyl cyanide compound graft copolymer

The acrylate rubber of the graft copolymer (A-2) has an average particle diameter of 300 to 600 nm, preferably 350 to 600 nm, more preferably 350 to 550 nm. Within this range, mechanical properties such as tensile strength, elongation, and impact strength may be excellent.

For example, based on a total weight of the thermoplastic resin composition, the graft copolymer (A-2) may be included in an amount of 15 to 35 % by weight, preferably 20 to 30 % by weight, more preferably 20 to 25 % by weight. Within this range, processability may be excellent during co-extrusion, and mechanical properties such as impact strength, tensile strength, and elongation, appearance, and surface hardness may be excellent.

For example, the graft copolymer (A-2) may include 40 to 60 % by weight of acrylate rubber, 25 to 45 % by weight of an aromatic vinyl compound, and 10 to 20 % by weight of a vinyl cyanide compound. Within this range, mechanical properties such as tensile strength, elongation, and impact strength may be excellent.

As a preferred example, the graft copolymer (A-1) may include 45 to 55 % by weight of acrylate rubber, 30 to 40 % by weight of an aromatic vinyl compound, and 10 to 20 % by weight of a vinyl cyanide compound. Within this range, mechanical properties such as tensile strength, elongation, and impact strength may be excellent.

For example, the graft copolymer (A-2) may be prepared by emulsion polymerization. In this case, mechanical properties such as tensile strength, elongation, and impact strength may be excellent.

Emulsion graft polymerization methods commonly practiced in the art to which the present invention pertains may be used as the emulsion polymerization method of the present invention without particular limitation.

For example, the acrylate may include one or more selected from the group consisting of alkyl acrylates containing an alkyl group having 2 to 8 carbon atoms, preferably an alkyl acrylate containing an alkyl group having 4 to 8 carbon atoms, more preferably butyl acrylate or ethylhexyl acrylate.

For example, the aromatic vinyl compound may include one or more selected from the group consisting of styrene, α-methylstyrene, m-methylstyrene, p-methylstyrene, and p-tert-butylstyrene, preferably styrene.

For example, the vinyl cyanide compound may include one or more selected from the group consisting of acrylonitrile, methacrylonitrile, ethylacrylonitrile, and isopropylacrylonitrile, preferably acrylonitrile.

For example, the sum of the weights of the graft copolymer (A-1) and the graft copolymer (A-2) may be 10 to 70 % by weight, preferably 20 to 50 % by weight, more preferably 30 to 40 % by weight. Within this range, low-temperature processability may be excellent, and thus appearance may be excellent.

The amount of the graft copolymer (A-1) is preferably less than that of the graft copolymer (A-2). Specifically, the weight ratio of the graft copolymer (A-1) to the graft copolymer (A-2) is preferably 1:1.2 to 1:2.5, more preferably 1:1.4 to 1:2.5, still more preferably 1:1.5 to 1:2. Within this range, low-temperature processability may be excellent, and thus appearance may be excellent.

In this specification, the weight ratio of A to B refers to the weight ratio of A:B.

### (B-1) High molecular weight aromatic vinyl compound-vinyl cyanide compound copolymer

The high molecular weight aromatic vinyl compound-vinyl cyanide compound copolymer (B-1) of the present invention is an aromatic vinyl compound-vinyl cyanide compound copolymer having a weight average molecular weight of 160,000 to 200,000 g/mol, more preferably an aromatic vinyl compound-vinyl cyanide compound copolymer having a weight average molecular weight of 160,000 to 190,000 g/mol, still more preferably an aromatic vinyl compound-vinyl cyanide compound copolymer having a weight average molecular weight of 160,000 to 180,000 g/mol, still more preferably an aromatic vinyl compound-vinyl cyanide compound copolymer having a weight average molecular weight of 160,000 to 170,000 g/mol. Within this range, mechanical strength, such as impact strength, and heat resistance may be excellent.

Based on a total weight of the acrylate-aromatic vinyl compound-vinyl cyanide compound graft copolymer (A) and the non-grafted copolymer (B), the high molecular weight aromatic vinyl compound-vinyl cyanide compound copolymer (B-1) is preferably included in an amount of 20 to 55 % by weight, more preferably 25 to 50 % by weight. In this case, heat resistance may be excellent without deterioration in low-temperature processability.

In this specification, weight average molecular weight may be measured using tetrahydrofuran (THF) as an eluate through gel permeation chromatography (GPC, Waters Breeze). In this case, weight average molecular weight is obtained as a relative value to a polystyrene standard (PS) specimen. Specific measurement conditions are as follows: solvent: THF, column temperature: 40 °C, flow rate: 0.3 ml/min, sample concentration: 20 mg/ml, injection amount: 5 µl, column model: 1×PLgel 10 µm MiniMix-B (250×4.6 mm) + 1×PLgel 10 µm MiniMix-B (250×4.6 mm) + 1×PLgel 10 µm MiniMix-B Guard (50×4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, the high molecular weight aromatic vinyl compound-vinyl cyanide compound copolymer (B-1) may include 65 to 80 % by weight of an aromatic vinyl compound and 20 to 35 % by weight of a vinyl cyanide compound, preferably 67 to 80 % by weight of an aromatic vinyl compound and 20 to 33 % by weight of a vinyl cyanide compound, more preferably 70 to 75 % by weight of an aromatic vinyl compound and 25 to 30 % by weight of a vinyl cyanide compound. Within this range, mechanical strength and low-temperature processability may be excellent.

The aromatic vinyl compound includes styrene.

For example, the vinyl cyanide compound may include one or more selected from the group consisting of acrylonitrile, methacrylonitrile, ethylacrylonitrile, and isopropylacrylonitrile, preferably acrylonitrile.

For example, the high molecular weight aromatic vinyl polymer (B-1) may be prepared by suspension polymerization, emulsion polymerization, solution polymerization, or bulk polymerization, preferably bulk polymerization. In this case, heat resistance and fluidity may be excellent.

Suspension polymerization, emulsion polymerization, solution polymerization, and bulk polymerization commonly practiced in the art to which the present invention pertains may be used in the present invention without particular limitation.

### (B-2) Low molecular weight aromatic vinyl compound-vinyl cyanide compound copolymer

The low molecular weight aromatic vinyl compound-vinyl cyanide compound copolymer (B-2) of the present invention is an aromatic vinyl compound-vinyl cyanide compound copolymer having a weight average molecular weight of greater than 80,000 g/mol or more and less than 160,000 g/mol, and preferably includes one or more selected from the group consisting of an aromatic vinyl compound-vinyl cyanide compound copolymer (B-2a) having a weight average molecular weight of 80,000 to 110,000 g/mol, an aromatic vinyl compound-vinyl cyanide compound copolymer (B-2b) having a weight average molecular weight of greater than 110,000 g/mol and less than or equal to 110,000 g/mol, and an aromatic vinyl compound-vinyl cyanide compound copolymer (B-2c) having a weight average molecular weight of greater than 110,000 g/mol and less than 160,000 g/mol, more preferably an aromatic vinyl compound-vinyl cyanide compound copolymer (B-2a) having a weight average molecular weight of 80,000 to 110,000 g/mol or an aromatic vinyl compound-vinyl cyanide compound copolymer (B-2c) having a weight average molecular weight of greater than 110,000 g/mol and less than 160,000 g/mol. Within this range, due to excellent processability at a low temperature of less than 200 °C, no surface defects, such as flow marks or peeling, occur even during co-extrusion with a PVC resin. In addition, energy consumption may be reduced, thereby improving economics.

Based on a total weight of the acrylate-aromatic vinyl compound-vinyl cyanide compound graft copolymer (A) and the non-grafted copolymer (B), the low molecular weight aromatic vinyl compound-vinyl cyanide compound copolymer (B-2) is preferably included in an amount of 5 to 30 % by weight, more preferably 5 to 35 % by weight. Within this range, chemical resistance, impact strength, tensile strength, and low-temperature processability may be excellent.

Based on a total weight of the acrylate-aromatic vinyl compound-vinyl cyanide compound graft copolymer (A) and the non-grafted copolymer (B), the aromatic vinyl compound-vinyl cyanide compound copolymer (B-2a) is preferably included in an amount of 10 to 30 % by weight, more preferably 10 to 25 % by weight, still more preferably 10 to 20 % by weight. Within this range, chemical resistance, impact strength, tensile strength, and low-temperature processability may be excellent.

Based on a total weight of the acrylate-aromatic vinyl compound-vinyl cyanide compound graft copolymer (A) and the non-grafted copolymer (B), the aromatic vinyl compound-vinyl cyanide compound copolymer (B-2b) is preferably included in amount of 10 to 30 % by weight, more preferably 10 to 25 % by weight, still more preferably 10 to 20 % by weight. Within this range, chemical resistance, impact strength, tensile strength, and low-temperature processability may be excellent.

Based on a total weight of the acrylate-aromatic vinyl compound-vinyl cyanide compound graft copolymer (A) and the non-grafted copolymer (B), the aromatic vinyl compound-vinyl cyanide compound copolymer (B-2c) is preferably included in an amount of 10 to 40 % by weight, more preferably 20 to 40 % by weight, still more preferably 20 to 35 % by weight. Within this range, chemical resistance, impact strength, tensile strength, and low-temperature processability may be excellent.

The low molecular weight aromatic vinyl compound-vinyl cyanide compound copolymer (B-2) preferably includes 65 to 80 % by weight of an aromatic vinyl compound and 20 to 35 % by weight of a vinyl cyanide compound, more preferably 67 to 80 % by weight of an aromatic vinyl compound and 20 to 33 % by weight of a vinyl cyanide compound, still more preferably 70 to 75 % by weight of an aromatic vinyl compound and 25 to 30 % by weight of a vinyl cyanide compound. Within this range, chemical resistance, impact strength, tensile strength, and processability may be excellent.

The aromatic vinyl compound includes styrene.

For example, the vinyl cyanide compound may include one or more selected from the group consisting of acrylonitrile, methacrylonitrile, ethylacrylonitrile, and isopropylacrylonitrile, preferably acrylonitrile.

For example, the low molecular weight aromatic vinyl polymer (B-2) may be prepared by suspension polymerization, emulsion polymerization, solution polymerization, or bulk polymerization, preferably bulk polymerization. In this case, heat resistance and fluidity may be excellent.

Suspension polymerization, emulsion polymerization, solution polymerization, and bulk polymerization commonly practiced in the art to which the present invention pertains may be used in the present invention without particular limitation.

Based on a total weight of the acrylate-aromatic vinyl compound-vinyl cyanide compound graft copolymer (A) and the non-grafted copolymer (B), the non-grafted copolymer (B) is included in an amount of 30 to 90 % by weight, more preferably 40 to 80 % by weight, still more preferably 50 to 70 % by weight, still more preferably 50 to 60 % by weight. Within this range, low-temperature processability and heat resistance may be excellent.

### Polyamide resin

Based on 100 parts by weight in total of the acrylate-aromatic vinyl compound-vinyl cyanide compound graft copolymer (A) and the non-grafted copolymer (B), the polyamide resin of the present invention is preferably included in an amount of 0.1 to 10 parts by weight, more preferably 1 to 10 parts by weight, still more preferably 3 to 9 parts by weight, most preferably 4 to 7 parts by weight. Within this range, matte properties may be excellent while maintaining mechanical properties and low-temperature processability.

The polyamide resin preferably has a relative viscosity (96 % sulfuric acid solution) of 2.5 or less, as a specific example, 2.0 to 2.5, as a preferred example, 2.2 to 2.5. Within this range, matte properties may be excellent while maintaining mechanical properties, weather resistance, and processability.

In this specification, relative viscosity may be measured using an Ubbelohde viscometer by the ISO 307 sulfuric acid method. Specifically, 1 g of a specimen to be measured is dissolved in 100 ml of an aqueous sulfuric acid solution having a concentration of 96 % by weight to prepare a solution, and relative viscosity is measured at 20 °C using the solution and using a Brookfield rotational viscometer.

As a specific example, the polyamide resin may include one or more selected from the group consisting of polyamide 6, polyamide 66 (PA 6.6), polyamide 46, polyamide 11, polyamide 12, polyamide 610, polyamide 612, polyamide 6/66, polyamide 6/612, polyamide MXD6, polyamide 6/MXD6, polyamide 66/MXD6, polyamide 6T, polyamide 6I, polyamide 6/6T, polyamide 6/6I, polyamide 66/6T, polyamide 66/6I, polyamide 6/6T/6I, polyamide 66/6T/6I, polyamide 9T, polyamide 9I, polyamide 6/9T, polyamide 6/9I, polyamide 66/9T, polyamide 6/12/9T, polyamide 66/12/9T, polyamide 6/12/91, and polyamide 66/12/6I, preferably one or more selected from the group consisting of polyamide 6, polyamide 12, and polyamide 66, more preferably polyamide 66. In this case, matte properties may be excellent while maintaining mechanical properties, weather resistance, and processability.

Polymerization methods commonly practiced in the art to which the present invention pertains may be used as a method of preparing the polyamide resin without particular limitation, and commercially available polyamides may also be used when the commercially available polyamides follow the definition of the polyamide according to the invention.

### Inorganic pigment

Based on 100 parts by weight in total of the acrylate-aromatic vinyl compound-vinyl cyanide compound graft copolymer (A) and the non-grafted copolymer (B), the inorganic pigment of the present invention is preferably included in an amount of 0.1 to 5 parts by weight, more preferably 0.1 to 2 parts by weight, still more preferably 0.1 to 1 part by weight, still more preferably 0.3 to 0.8 parts by weight. Within this range, weather resistance and hiding power may be excellent.

For example, the inorganic pigment may include one or more selected from the group consisting of metal compounds including Ti, Pb, Fe, Cr, etc and carbon black. The metal compounds are preferably metal oxides or metal hydroxides. As a specific example, the inorganic pigment may include one or more selected from the group consisting of TiO₂ and zinc oxide as white inorganic pigments; carbon black and graphite as black inorganic pigments; IOR, cadmium red, and red lead (Pb₃O₄) as red inorganic pigments; chrome yellow, zinc chromate, and cadmium yellow as yellow inorganic pigments; and chrome green and zinc green as green inorganic pigments, and most preferably, is TiO₂, which is a white inorganic pigment.

### Additives

The thermoplastic resin composition of the present invention preferably includes a lubricant, an antioxidant, and a UV stabilizer.

Based on 100 parts by weight in total of the acrylate-aromatic vinyl compound-vinyl cyanide compound graft copolymer (A) and the non-grafted copolymer (B), the lubricant is preferably included in an amount of 0.1 to 3 parts by weight, more preferably 0.3 to 1 part by weight, still more preferably 0.3 to 0.8 parts by weight. Within this range, a surface having a rough feeling may be implemented, and impact strength and fluidity may be excellent.

For example, the lubricant may include one or more selected from the group consisting of an ester-based lubricant, a metal salt-based lubricant, a carboxylic acid-based lubricant, a hydrocarbon-based lubricant, and an amide-based lubricant, preferably an amide-based lubricant, more preferably a stearamide-based lubricant, most preferably alkylene bis(stearamide) containing alkylene having 1 to 10 carbon atoms. In this case, a surface having a rough feeling may be implemented, and impact strength and fluidity may be excellent.

In this specification, the stearamide-based lubricant may include stearamide and a stearamide substituent in which one or more hydrogens thereof are substituted with other substituents.

Ester-based lubricants, metal salt-based lubricants, carboxylic acid-based lubricants, hydrocarbon-based lubricants, and amide-based lubricants commonly used in the art may be used in the present invention without particular limitation.

The antioxidant preferably includes one or more selected from the group consisting of a phenolic antioxidant and a phosphorus antioxidant, more preferably a mixture of a phenol-based antioxidant and a phosphorus-based antioxidant.

Based on 100 parts by weight in total of the acrylate-aromatic vinyl compound-vinyl cyanide compound graft copolymer (A) and the non-grafted copolymer (B), each of the phenolic antioxidant and the phosphorus antioxidant is preferably included in an amount of 0.1 to 2 parts by weight, more preferably 0.1 to 1 part by weight, still more preferably 0.2 to 0.6 parts by weight. Within this range, a surface having a rough feeling may be implemented, and an antioxidative effect may be excellent.

The phenol-based antioxidant preferably includes one or more selected from tetrakis[ethylene-3-(3,5-di-t-butyl-hydroxyphenyl)propionate] (IR-1010), octadecyl 3-(3,5-di-t-butyl-4-hydroxyphenyl) propionate (IR-1076), pentaerythritol tetrakis[3-(3,5-di-t-butyl-4-hydroxyphenyl)propionate], and 1,3,5-trimethyl-2,4,6-tris(3,5-di-t-butyl-4-hydroxybenzyl) benzene, more preferably octadecyl 3-(3,5-dit-butyl-4-hydroxyphenyl)propionate (IR-1076). In this case, a surface having a rough feeling may be implemented, and antioxidative effect may be excellent.

The phosphorus-based antioxidant preferably includes one or more selected from the group consisting of tris(2,4-di-tert-butylphenyl) phosphite, tris(nonylphenyl) phosphite (TNPP), and di-(2,4-di-tert-butylphenyl) pentaerythritol diphosphite, more preferably tris(2,4-di-tert-butylphenyl) phosphite. Within this range, a surface having a rough feeling may be implemented, and antioxidative effect may be excellent.

The UV stabilizer preferably includes one or more selected from the group consisting of a benzotriazole-based UV stabilizer and a HALS-based UV stabilizer, more preferably a mixture of a benzotriazole-based UV stabilizer and a HALS-based UV stabilizer.

Based on 100 parts by weight in total of the acrylate-aromatic vinyl compound-vinyl cyanide compound graft copolymer (A) and the non-grafted copolymer (B), the UV stabilizer preferably includes 0.1 to 2 parts by weight of a benzotriazole-based UV stabilizer and 0.1 to 2 parts by weight of a HALS-based UV stabilizer, more preferably 0.2 to 1 part by weight of a benzotriazole-based UV stabilizer and 0.2 to 1 part by weight of a HALS-based UV stabilizer, still more preferably 0.3 to 0.8 parts by weight of a benzotriazole-based UV stabilizer and 0.3 to 0.8 parts by weight of a HALS-based UV stabilizer. Within this range, a surface having a rough feeling may be implemented, and light resistance may be excellent.

For example, the benzotriazole-based UV stabilizer may be a hydroxybenzotriazole-based compound, preferably a 2-(2'-hydroxyphenyl)benzotriazole-based compound, and more preferably includes one or more selected from the group consisting of 2-(2'-hydroxy-5'-methylphenyl)benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl-5-chlorobenzotriazole), 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxy-carbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)phenyl)-5-chlorobenzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-ylphenol], and a transesterification product of 2-[3'-tert-butyl-5'-(2-methoxycarbonylethyl)-2'-hydroxyphenyl]-2H-benzotriazole and polyethyleneglycol. Within this range, a surface having a rough feeling may be implemented, and light resistance may be excellent.

The HALS-based UV stabilizer preferably includes one or more selected from the group consisting of 1,1-bis(2,2,6, 6-tetramethyl-4-piperidyl)succinate, bis(2,2,6,6-tetramethyl-4-piperidyl)sebacate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl)-N-butyl-3,5-di-tert-butyl-4-hydroxybenzylmalonate, a condensation product of 1-(2-hydroxyethyl)-2,2,6,6-tetramethyl-4-hydroxypiperidine and succinic acid, a linear or cyclic condensation product of N,N'-bis(2,2,6,6-tetramethyl-4-piperidyl)hexamethylene diamine and 4-tert-octylamino-2,6-di-chloro-1,3,5-triazine, tris(2,2,6,6-tetramethyl-4-piperidyl)nitrilotriacetate, tetrakis(2,2,6,6-tetramethyl-4-piperidyl)-1,2,3,4-butane tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, a linear or cyclic condensation product of N,N'-bis(2,2,6,6-tetramethyl-4-piperidyl)hexamethylene diamine and 4-morpholino-2,6-dichloro-1,3,5-triazine, and a reaction product of 7,7,9,9-tetramethyl-2-cycloundecyl-1-oxa-3,8-diaza-4-oxospiro-[4,5]decane and epichlorohydrin, more preferably bis(2,2,6,6-tetramethyl-4-piperidyl)sebacate, 2-(2H-benzotriazole-2-yl)-4-(1,1,3,3-tetramethylbutyl)phenol, or a mixture thereof. Within this range, a surface having a rough feeling may be implemented, and light resistance may be excellent.

When necessary, based on 100 parts by weight in total of the acrylate-aromatic vinyl compound-vinyl cyanide compound graft copolymer (A) and the non-grafted copolymer (B), the thermoplastic resin composition of the present invention may further include 0.01 to 5 parts by weight, 0.05 to 3 parts by weight, 0.1 to 2 parts by weight, or 0.5 to 1 part by weight of one or more selected from the group consisting of a heat stabilizer, a dye, a pigment (excluding inorganic pigments), a colorant, a release agent, an antistatic agent, an antibacterial agent, a processing aid, a metal deactivator, a flame retardant, a smoke suppressant, an anti-dripping agent, an anti-friction agent, and an antiwear agent. Within this range, required physical properties may be implemented without reducing the effect desired in the present invention.

### Thermoplastic resin composition

In the case of the thermoplastic resin composition of the present invention, when extrusion RPM is changed from 20 to 60 under conditions of a barrel temperature of 190 °C and a die temperature of 200 °C, the pressure gradient of the thermoplastic resin composition applied to a single screw extruder for sheet molding (type of die: T-die) is 130 or less, more preferably 100 to 130, still more preferably 110 to 130. Within this range, since change in viscosity according to shearing is insignificant, processing stability may be excellent.

When the thermoplastic resin composition is discharged through a T-die of a single screw T-die extruder for 1 minute and 30 seconds under conditions of a barrel temperature of 190 °C, a die temperature of 200 °C, and an extrusion RPM of 50, a discharge rate calculated based on the discharge amount of the thermoplastic resin composition is preferably 18 g/min or more, more preferably 18 to 19.5 g/min, still more preferably 18 to 19.0 g/min. Within this range, processability and economics may be excellent.

The thermoplastic resin composition preferably has a capillary viscosity of 2,500 to 3,200 Pa·s, more preferably 2,600 to 3,100 Pa·s, still more preferably 2,700 to 3,000 Pa·s as measured at 190 °C in a shear range of 100/s. Within this range, processability and economics may be excellent.

The thermoplastic resin composition preferably has a storage modulus (geometry: 25 mm parallel plate) of 70,000 to 150,000 MPa, more preferably 80,000 to 140,000 MPa, still more preferably 90,000 to 130,000 MPa, as measured under conditions of a temperature of 190 °C, a strain of 0.1%, and a frequency of 10 rad/s. Within this range, since adhesion to the surface of a PVC resin is increased, the surface of the PVC resin may be effectively covered by an ASA resin, layer separation may not occur, and processability may be excellent.

The thermoplastic resin composition preferably has a skewness Rsk (200 °C) of 0 to 0.5, more preferably 0 to 0.4, still more preferably 0 to 0.3, still more preferably 0.05 to 0.2, most preferably 0.08 to 0.15. Within this range, weather resistance may be excellent without deterioration in mechanical properties and processability, and a product having a luxurious appearance, i.e., a rough feeling, without an artificial plastic feel may be provided.

The thermoplastic resin composition preferably has a skewness Rsk (220 °C) of 0.65 to 1.35, more preferably 0.7 to 1.2, still more preferably 0.7 to 1.3, still more preferably 0.7 to 1.0, most preferably 0.74 to 0.9. Within this range, weather resistance may be excellent without deterioration in mechanical properties and processability, and a product having a luxurious appearance, i.e., a rough feeling, without an artificial plastic feel may be provided.

The thermoplastic resin composition preferably does not include a thermoplastic resin having a glass transition temperature of 125 °C or higher. More preferably, the thermoplastic resin composition does not include one or more selected from the group consisting of an alpha-methylstyrene-vinyl cyanide compound copolymer and a methacrylate-aromatic vinyl compound-vinyl cyanide compound copolymer. Still more preferably, the thermoplastic resin composition does not include both of an alpha-methylstyrene-vinyl cyanide compound copolymer and a methacrylate-aromatic vinyl compound-vinyl cyanide compound copolymer. In this case, low-temperature processability may not decrease at a temperature of less than 200 °C.

In this specification, glass transition temperature (Tg) may be measured by a measurement method commonly used in the art to which the present invention pertains to. As a specific example, glass transition temperature (Tg) may be measured using a differential scanning calorimeter (DSC) according to ASTM D 3418.

In this specification, that a predetermined thermoplastic resin is not included means that the thermoplastic resin is not included at all, and also means that the thermoplastic resin is added in an amount that does not alter the effects of the thermoplastic resin composition of the present invention at all. As a specific example, the amount of the thermoplastic resin may be less than 3 % by weight, less than 2 % by weight, less than 1 % by weight, less than 0.5 % by weight, or less than 0.1 % by weight. Specifically, in the case of a heat resistant SAN resin such as alpha-methylstyrene-acrylonitrile copolymers, viscosity is high at low temperature, and change in viscosity is significant according to RPM. Accordingly, when the heat resistant SAN resin is added to the thermoplastic resin composition of the present invention, viscosity increases under low temperature processing conditions, thus deteriorating low-temperature processability and narrowing a processing window, thereby degrading processing stability. Accordingly, as described above, the heat resistant SAN resin is preferably excluded from the thermoplastic resin composition of the present invention.

The thermoplastic resin composition is preferably a decking material. In this case, physical properties required for a decking material may be satisfied.

The thermoplastic resin composition preferably has a heat resistance of 80 °C or higher, more preferably 82 °C or higher, still more preferably 84 °C or higher, as a preferred example, 80 to 90 °C, as a more preferred example, 82 to 90 °C, as measured under a load of 18.6 kgf according to ASTM D648. Within this range, sufficient heat resistance may be secured, and low-temperature processability may be excellent at a temperature of less than 200 °C.

The thermoplastic resin composition is preferably a matte thermoplastic resin composition having a film gloss of 15 or less as measured at 60° using a gloss meter VG7000. More preferably, the thermoplastic resin composition is a matte thermoplastic resin composition having a film gloss of 10 or less, still more preferably 8 or less. Within this range, matte properties and physical property balance may be excellent. Thus, the thermoplastic resin composition of the present invention may be referred to as a matte thermoplastic resin composition.

A method of preparing the thermoplastic resin composition of the present invention preferably includes extruding and kneading a thermoplastic resin composition at 220 to 280 °C using an extrusion kneader to prepare pellets, wherein the thermoplastic resin composition includes 10 to 70 % by weight of a graft copolymer (A) including an acrylate-aromatic vinyl compound-vinyl cyanide compound graft copolymer (A-1) containing acrylate rubber having an average particle diameter of 50 to 150 nm and an acrylate-aromatic vinyl compound-vinyl cyanide compound graft copolymer (A-2) containing acrylate rubber having an average particle diameter of 300 to 600 nm; and 30 to 90 % by weight of a non-grafted copolymer (B) including a high molecular weight aromatic vinyl compound-vinyl cyanide compound copolymer (B-1) having a weight average molecular weight of 160,000 to 200,000 g/mol, wherein the aromatic vinyl compound of the high molecular weight aromatic vinyl compound-vinyl cyanide compound copolymer (B-1) includes styrene, and a low molecular weight aromatic vinyl compound-vinyl cyanide compound copolymer (B-2) having a weight average molecular weight of 80,000 g/mol or more and less than 160,000 g/mol, , wherein the aromatic vinyl compound of the high molecular weight aromatic vinyl compound-vinyl cyanide compound copolymer (B-2) includes styrene, wherein, when extrusion RPM is changed from 20 to 60 under conditions of a barrel temperature of 190 °C and a die temperature of 200 °C, a pressure gradient applied to a single screw extruder for sheet molding is 130 or less. In the case of the thermoplastic resin composition of the present invention, compared to a conventional ASA resin, processability is excellent at a low temperature of less than 200 °C, and thus no surface defects, such as flow marks or peeling, occur even during co-extrusion with a PVC resin. In addition, energy consumption is reduced. In addition, a PVC resin may be effectively covered using a small amount of an ASA resin, and thus economics is excellent. In addition, heat resistance is excellent.

As a specific example, under the conditions of a barrel temperature of 190 °C and a die temperature of 200 °C, the temperatures of the barrel part may be 50, 190, 190, and 190°C, and the temperatures of the die part may be 200, 200, and 200 °C.

The method of preparing the thermoplastic resin composition shares all the technical characteristics of the thermoplastic resin composition described above, and thus repeated description thereof will be omitted.

The step of preparing pellets using an extrusion kneader is preferably performed at 220 to 290 °C, more preferably 250 to 290 °C, still more preferably 270 to 290 °C. In this case, the temperature is the temperature of a cylinder.

Extrusion kneaders commonly used in the art to which the present invention pertains may be used without particular limitation, and a twin-screw extrusion kneader is preferably used.

### <Molded article>

A molded article of the present invention includes the thermoplastic resin composition of the present invention. In the case of the thermoplastic resin composition of the present invention, compared to a conventional ASA resin, processability is excellent at a low temperature of less than 200 °C, and thus no surface defects, such as flow marks or peeling, occur even during co-extrusion with a PVC resin. In addition, energy consumption is reduced. In addition, a PVC resin may be effectively covered using a small amount of an ASA resin, and thus economics is excellent. In addition, heat resistance is excellent.

The molded article is preferably an exterior material, more preferably a co-extrusion-molded article or an injection-molded article, still more preferably an article manufactured by co-extrusion with a PVC resin, as a specific example, a siding material, a decking material, a roofing material, a sliding door material, or a window material, as the most preferred example, a decking material.

For example, the molded article may be manufactured by co-extruding the thermoplastic resin composition of the present invention at a molding temperature of less than 200 °C, preferably a molding temperature of 180 °C or higher and less than 200 °C, more preferably a molding temperature of 190 to 199 °C. Within this range, no surface defects occur, and energy consumption is reduced, thereby improving economics.

As another example, the molded article may be manufactured by extruding or injecting the thermoplastic resin composition of the present invention at a molding temperature of 190 to 250 °C, preferably 190 to 230 °C, more preferably 190 to 220 °C.

In describing the thermoplastic resin composition of the present invention, the method of preparing the same, and the molded article including the same, other conditions or equipment that are not explicitly described may be appropriately selected without particular limitation within the range commonly practiced in the art.

Hereinafter, the present invention will be described in more detail with reference to the following preferred examples.

### [Examples]

Materials used in Examples 1 to 6 and Comparative Examples 1 to 5 below are as follows.
A-1) Graft copolymer: Butylacrylate-styreneacrylonitrile copolymer (butylacrylate: 50 % by weight, styrene: 35 % by weight, and acrylonitrile: 15 % by weight) containing acrylate rubber having an average particle diameter of 130 nm
A-2) Graft copolymer: Butylacrylate-styreneacrylonitrile copolymer (butylacrylate: 50 % by weight, styrene: 35 % by weight, and acrylonitrile: 15 % by weight) containing acrylate rubber having an average particle diameter of 500 nm
B-1) SAN resin prepared by bulk polymerization (95HCP, manufactured by LG Chemical Co., weight average molecular weight: 91,000 g/mol)
B-2) SAN resin prepared by bulk polymerization (92HR, manufactured by LG Chemical Co., weight average molecular weight: 130,000 g/mol)
B-3) SAN resin prepared by bulk polymerization (90HR, manufactured by LG Chemical Co., weight average molecular weight: 150,000 g/mol)
B-4) SAN resin prepared by bulk polymerization (97HC, manufactured by LG Chemical Co., weight average molecular weight: 170,000 g/mol)
B-5) Heat-resistant SAN resin prepared by bulk polymerization (200UH, manufactured by LG Chemical Co., weight average molecular weight: 90,000 g/mol)
D) Nylon 66

### Examples 1 to 6 and Comparative Examples 1 to 5

As shown in Table 1 below, the components were added according to the contents. At this time, 0.5 parts by weight of EBS (manufactured by SUNKOO Co.) as a lubricant, 0.4 parts by weight of octadecyl 3-(3,5-di-tert-butyl-4-hydroxyphenyl)propanoate and 0.4 parts by weight of tris(2,4-di-tert-butylphenyl)phosphite) as antioxidants, 0.6 parts by weight of Tinuvin 329 (manufactured by BASF), which is a benzotriazole-based UV stabilizer, and 0.6 parts by weight of Tinuvin 770 (manufactured by BASF), which is a HALS-based UV stabilizer were added to each sample and mixed uniformly, and then the mixture was kneaded and extruded at 280 °C using a twin-screw extruder to prepare pellets. In addition, the pellets were used to prepare a sheet having a thickness of 0.15 T. At this time, the sheet was prepared using a single screw T-die extruder under conditions of barrel temperatures of 50, 190, 190, and 190 °C and die temperatures of 200, 200, and 200 °C. The prepared sheet was used to measure gloss and surface roughness. In addition, the prepared pellets were injected at a molding temperature of 220 °C to prepare a specimen for measuring physical properties. Then, the tensile strength and impact strength of the specimen were measured.

### [Test Examples]

The properties of the pellets, the sheets, and the specimens prepared in Examples 1 to 6 and Comparative Examples 1 to 5 were measured according to the following methods, and the results are shown in Table 1 below.
* Heat resistance (°C): Heat resistance was measured under a load of 18.6 kgf according to ASTM D648.
* Gloss: Gloss was measured at 60° using a gloss meter VG7000.
* Pressure gradient: When extrusion RPM was changed from 20 to 60 under conditions of barrel temperatures of 50, 190, 190, and 190 °C and die temperatures of 200, 200, and 200 °C, the pressure of a thermoplastic resin composition applied to a single screw extruder for sheet molding (E20T, Collin Co.) was measured. When measuring pressure gradient, after increasing RPM to 60, a resin was allowed to flow until the temperature of an adaptor inside an extruder was stabilized, and when the temperature was stabilized, pressure displayed on the extruder was recorded. Since temperature affects the viscosity of the resin, data should be taken after confirming that the temperature is constant. In the same manner, the pressure was recorded while sequentially decreasing RPM to 20. A slope obtained by drawing a logarithmic trend line on the graph of the obtained pressure change with respect to RPM was used as a pressure gradient value.
* Discharge rate: The discharge amount of a thermoplastic resin composition discharged through a T-die for 1 minute and 30 seconds under conditions of barrel temperatures of 50, 190, 190, and 190 °C, die temperatures of 200, 200, and 200 °C, and an extrusion RPM of 50 was measured. Discharge rate was calculated based on the measured discharge amount.
* Capillary viscosity (Pa·s): Flow viscosity was measured using a capillary rheometer (RG-75, GOETTFERT Co.) at 190 °C in a shear range of 10/s to 2,000/s. At this time, for result analysis, data in a shear range of 100/s was used, and the sample was dried in an oven at 80 °C for 3 hours or more before analysis to remove the effect of moisture on viscosity.
* Storage modulus (MPa): A strain-controlled rheometer (ARES-G2, TA Instrument Co.) was used. A geometry used for measurement at a measurement temperature of 190 °C was a 25 mm parallel plate. At this time, a strain of 0.1 % and a frequency of 0.1 to 500 rad/s were used. For result analysis, storage modulus data of 10 rad/s was used.
* Skewness (Rsk): Referring to FIG. 1, when skewness was measured, an optical profiler system (Nano View NV-2700, Nano System Co.) was used, and scanning was performed for a range of ±40 µm under conditions of a WSI Envelope mode and objective lens (20×) × ocular lens (1×). At this time, a sample was fixed flat on a stage, and measurement was performed for 5 points. For the measured values, an average value for 5 points was calculated using an equation for obtaining a root mean square deviation (Rq) shown in the upper image and an equation for obtaining skewness (Rsk) shown in the lower image.

Here, when skewness (Rsk, 200 °C) was measured, the prepared pellets were uniformly extruded to a thickness of 0.15 T through a 15 pi film extruder under conditions of barrel temperatures of 50, 190, 190, and 190 °C and die temperatures of 200, 200, and 200 °C, and Rsk was measured according to the above-described method. When skewness (Rsk, 220 °C) was measured, the prepared pellets were uniformly extruded to a thickness of 0.15 T through a 15 pi film extruder under conditions of barrel temperatures of 50, 200, 210, and 210 °C and die temperatures of 220, 220, and 230 °C, and Rsk was measured according to the above-described method.

**[Table 1]**

| (Parts by weight) | | Examples | | | | | | Comparative Examples | | | | |
|---|---|---|---|---|---|---|---|---|---|---|---|---|
| | | 1 | 2 | 3 | 4 | 5 | 6 | 1 | 2 | 3 | 4 | 5 |
| A-1 | | 13 | 13 | 13 | 13 | 15 | 17 | 25 | 13 | 13 | 13 | 13 |
| A-2 | | 23 | 23 | 23 | 23 | 19 | 17 | 15 | 25 | 23 | 23 | 23 |
| B-1 | | | 15 | 25 | | | | | | 58 | | |
| B-2 | | | | | | | 20 | | | | 58 | |
| B-3 | | 20 | | | 30 | 20 | | | 41 | | | 58 |
| B-4 | | 38 | 43 | 33 | 28 | 40 | 40 | | | | | |
| B-5 | | | | | | | | 54 | 15 | | | |
| D | | 6 | 6 | 6 | 6 | 6 | 6 | 6 | 6 | 6 | 6 | 6 |
| TiO₂ pigment | | 0.6 | 0.6 | 0.6 | 0.5 | 0.5 | 0.6 | 0.6 | 0.6 | 0.6 | 0.6 | 0.6 |
| RP M | 60 | 326 | 288 | 295 | 292 | 291 | 281 | 370 | 311 | 275 | 282 | 296 |
| | 50 | 310 | 271 | 277 | 273 | 275 | 264 | 346 | 290 | 255 | 266 | 276 |
| | 40 | 289 | 249 | 252 | 248 | 252 | 242 | 310 | 259 | 228 | 242 | 252 |
| | 30 | 248 | 213 | 217 | 209 | 218 | 210 | 264 | 215 | 202 | 210 | 220 |
| | 20 | 189 | 157 | 166 | 157 | 163 | 160 | 193 | 154 | 171 | 167 | 170 |
| Slope | | 126.16 | 119.76 | 118.2 | 124.13 | 117.09 | 110.33 | 162.07 | 144.55 | 94.92 | 105.95 | 114.27 |
| Dischargerate (g/min) | | 18.1 | 18.5 | 18.3 | 18.4 | 18.7 | 18.9 | 15.9 | 17.4 | 19.3 | 18.7 | 18.3 |
| Capillary viscosity (Pa·s) | | 2837 | 2766 | 2799 | 2778 | 2613 | 2793 | 3338 | 2988 | 2587 | 2714 | 2799 |
| Storage modulus (MPa) | | 125070 | 107017 | 113842 | 116711 | 107503 | 94342 | 131601 | 111484 | 74351 | 89648 | 100207 |
| HDT (°C) | | 84.2 | 84.6 | 82.3 | 82.7 | 84.9 | 84.2 | 89.7 | 92.9 | 72.2 | 75.4 | 77.3 |
| Skewness (Rsk, 200 ° C) | | 0.12 | 0.11 | 0.08 | 0.14 | 0.15 | 0.12 | 0.34 | 0.28 | 0.14 | 0.13 | 0.09 |
| Skewness (Rsk, 220 ° C) | | 0.79 | 0.9 | 0.88 | 0.84 | 0.74 | 0.78 | 0.91 | 0.95 | 0.81 | 0.88 | 0.85 |
| Gloss (60°) | | 8.2 | 7.8 | 8 | 8.2 | 9.3 | 8.7 | 6.5 | 6.8 | 7.9 | 8.1 | 8.3 |

As shown in Table 1, compared to Comparative Examples 1 to 5 having partially different compositions, in the case of the thermoplastic resin compositions (Examples 1 to 6) according to the present invention, due to excellent processability even at a low barrel temperature of less than 200 °C, no surface defects, such as flow marks or peeling, occur. In addition, energy consumption is reduced, and change in viscosity is insignificant according to change in extrusion RPM, thereby increasing processing stability. In addition, heat resistance is excellent. More specifically, in the case of Comparative Examples 1 and 2 using a heat-resistant SAN resin instead of the SAN resin according to the present invention, due to low discharge rate, processability is deteriorated and economics is reduced. In the case of Comparative Examples 3 to 5 having a difference only in the type of the low molecular weight SAN resin, heat resistance (HDT) is deteriorated.

## Claims

1. A thermoplastic resin composition, comprising:
10 to 70 % by weight of a graft copolymer (A) comprising an acrylate-aromatic vinyl compound-vinyl cyanide compound graft copolymer (A-1) containing acrylate rubber having an average particle diameter of 50 to 150 nm and an acrylate-aromatic vinyl compound-vinyl cyanide compound graft copolymer (A-2) containing acrylate rubber having an average particle diameter of 300 to 600 nm; and
30 to 90 % by weight of a non-grafted copolymer (B) comprising a high molecular weight aromatic vinyl compound-vinyl cyanide compound copolymer (B-1) having a weight average molecular weight of 160,000 to 200,000 g/mol, wherein the aromatic vinyl compound of the high molecular weight aromatic vinyl compound-vinyl cyanide compound copolymer (B-1) includes styrene; and a low molecular weight aromatic vinyl compound-vinyl cyanide compound copolymer (B-2) having a weight average molecular weight of 80,000 g/mol or more and less than 160,000 g/mol, wherein the aromatic vinyl compound of the low molecular weight aromatic vinyl compound-vinyl cyanide compound copolymer (B-2) includes styrene;
wherein, when extrusion RPM is changed from 20 to 60 under conditions of a barrel temperature of 190 ° C and a die temperature of 200 ° C, a pressure gradient of the thermoplastic resin composition applied to a single screw extruder for sheet molding is 130 or less;
wherein the average particle diameter is measured by dynamic light scattering; and
wherein the weight average molecular weight may be measured by gel permeation chromatography using tetrahydrofuran (THF) as an eluate and is obtained as a relative value to a polystyrene standard (PS).

2. The thermoplastic resin composition according to claim 1, wherein, when the thermoplastic resin composition is discharged through a T-die for 1 minute and 30 seconds under conditions of a barrel temperature of 190 ° C, a die temperature of 200 ° C, and an extrusion RPM of 50, a discharge rate calculated based on a discharge amount of the thermoplastic resin composition is 18 g/min or more.

3. The thermoplastic resin composition according to claim 1, wherein, based on 100 parts by weight in total of the acrylate-aromatic vinyl compound-vinyl cyanide compound graft copolymer (A) and the non-grafted copolymer (B), the thermoplastic resin composition comprises 0.1 to 10 parts by weight of a polyamide resin.

4. The thermoplastic resin composition according to claim 1, wherein, based on 100 parts by weight in total of the acrylate-aromatic vinyl compound-vinyl cyanide compound graft copolymer (A) and the non-grafted copolymer (B), the thermoplastic resin composition comprises 0.1 to 5 parts by weight of an inorganic pigment.

5. The thermoplastic resin composition according to claim 1, wherein the thermoplastic resin composition does not comprise a thermoplastic resin having a glass transition temperature of 125 ° C or higher.

6. The thermoplastic resin composition according to claim 1, wherein a weight ratio of the graft copolymer (A-1) to the graft copolymer (A-2) is 1:1.2 to 1:2.5.

7. The thermoplastic resin composition according to claim 1, wherein the graft copolymer (A-1) comprises 40 to 60 % by weight of acrylate-based rubber, 20 to 40 % by weight of an aromatic vinyl compound, and 10 to 20 % by weight of a vinyl cyanide compound.

8. The thermoplastic resin composition according to claim 1, wherein the graft copolymer (A-2) comprises 40 to 60 % by weight of acrylate-based rubber, 25 to 45 % by weight of an aromatic vinyl compound, and 10 to 20 % by weight of a vinyl cyanide compound.

9. The thermoplastic resin composition according to claim 1, wherein each of the high molecular weight aromatic vinyl compound-vinyl cyanide compound copolymer (B-1) and the low molecular weight aromatic vinyl compound-vinyl cyanide compound copolymer (B-2) comprises 65 to 80 % by weight of an aromatic vinyl compound and 20 to 35 % by weight of a vinyl cyanide compound.

10. The thermoplastic resin composition according to claim 1, wherein the low molecular weight aromatic vinyl compound-vinyl cyanide compound copolymer (B-2) comprises
an aromatic vinyl compound-vinyl cyanide compound copolymer (B-2a) having a weight average molecular weight of 80,000 to 110,000 g/mol; or
an aromatic vinyl compound-vinyl cyanide compound copolymer (B-2c) having a weight average molecular weight of greater than 110,000 g/mol and less than 160,000 g/mol.

11. The thermoplastic resin composition according to claim 1, wherein the thermoplastic resin composition has a capillary viscosity of 2,500 to 3,200 Pa · s as measured at 190 ° C in a shear range of 100/s with a capillary rheometer.

12. The thermoplastic resin composition according to claim 1, wherein the thermoplastic resin composition has a storage modulus (geometry: 25 mm parallel plate) of 70,000 to 150,000 MPa as measured under conditions of a temperature of 190 ° C, a strain of 0.1%, and a frequency of 10 rad/s.

13. The thermoplastic resin composition according to claim 1, wherein the thermoplastic resin composition has a skewness Rsk (200 ° C) of 0 to 0.5 and a skewness Rsk (220 ° C) of 0.65 to 1.35 when measured with an optical profiler system under the conditions as disclosed in [0195] of the description.

14. The thermoplastic resin composition according to claim 1, wherein the thermoplastic resin composition is a matte thermoplastic resin composition having a film gloss of 15 or less as measured at 60° using a gloss meter.

15. A molded article, comprising the thermoplastic resin composition according to any one of claims 1 to 14.

## Patentansprüche

1. Thermoplastische Harzzusammensetzung, umfassend:
10 bis 70 Gew.-% eines Pfropfcopolymers (A), umfassend ein Acrylat-aromatische Vinylverbindung-Vinylcyanidverbindung-Pfropfcopolymer (A-1), das Acrylatkautschuk mit einem durchschnittlichen Teilchendurchmesser von 50 bis 150 nm enthält, und ein Acrylat-aromatische Vinylverbindung-Vinylcyanidverbindung-Pfropfcopolymer (A-2), das Acrylatkautschuk mit einem durchschnittlichen Teilchendurchmesser von 300 bis 600 nm enthält; und
30 bis 90 Gew.-% eines nicht gepfropften Copolymers (B), umfassend ein hochmolekulares aromatische Vinylverbindung-Vinylcyanidverbindung-Copolymer (B-1) mit einem gewichtsgemittelten Molekulargewicht von 160.000 bis 200.000 g/mol, wobei die aromatische Vinylverbindung des hochmolekularen aromatischen Vinylverbindung-Vinylcyanidverbindung-Copolymers (B-1) Styrol einschließt; und ein niedermolekulares aromatische Vinylverbindung-Vinylcyanidverbindung-Copolymer (B-2) mit einem gewichtsgemittelten Molekulargewicht von 80.000 g/mol oder mehr und weniger als 160.000 g/mol, wobei die aromatische Vinylverbindung des niedermolekularen aromatischen Vinylverbindung-Vinylcyanidverbindung-Copolymers (B-2) Styrol einschließt;
wobei, wenn die Extrusionsdrehzahl unter Bedingungen einer Zylindertemperatur von 190 °C und einer Düsentemperatur von 200 °C von 20 auf 60 geändert wird, ein Druckgradient der thermoplastischen Harzzusammensetzung, die auf einen Einschneckenextruder zum Folienformen aufgebracht wird, 130 oder weniger beträgt;
wobei der durchschnittliche Teilchendurchmesser durch dynamische Lichtstreuung gemessen wird; und
wobei das gewichtsgemittelte Molekulargewicht durch Gelpermeationschromatographie unter Verwendung von Tetrahydrofuran (THF) als Eluat gemessen werden kann und erhalten wird als ein relativer Wert zu einem Polystyrolstandard (PS).

2. Thermoplastische Harzzusammensetzung nach Anspruch 1, wobei, wenn die thermoplastische Harzzusammensetzung durch eine T-Düse für 1 Minute und 30 Sekunden unter Bedingungen einer Zylindertemperatur von 190 ° C, einer Düsentemperatur von 200 °C und einer Extrusionsdrehzahl von 50 abgegeben wird, eine Abgaberate, die basierend auf einer Abgabemenge der thermoplastischen Harzzusammensetzung berechnet wird, 18 g/min oder mehr beträgt.

3. Thermoplastische Harzzusammensetzung nach Anspruch 1, wobei, basierend auf insgesamt 100 Gewichtsteilen des Acrylat-aromatische Vinylverbindung-Vinylcyanidverbindung-Pfropfcopolymers (A) und des nicht gepfropften Copolymers (B), die thermoplastische Harzzusammensetzung 0,1 bis 10 Gewichtsteile eines Polyamidharzes umfasst.

4. Thermoplastische Harzzusammensetzung nach Anspruch 1, wobei, basierend auf insgesamt 100 Gewichtsteilen des Acrylat-aromatische Vinylverbindung-Vinylcyanidverbindung-Pfropfcopolymers (A) und des nicht gepfropften Copolymers (B), die thermoplastische Harzzusammensetzung 0,1 bis 5 Gewichtsteile eines anorganischen Pigments umfasst.

5. Thermoplastische Harzzusammensetzung nach Anspruch 1, wobei die thermoplastische Harzzusammensetzung kein thermoplastisches Harz mit einer Glasübergangstemperatur von 125 °C oder höher umfasst.

6. Thermoplastische Harzzusammensetzung nach Anspruch 1, wobei ein Gewichtsverhältnis des Pfropfcopolymers (A-1) zu dem Pfropfcopolymer (A-2) 1:1,2 bis 1:2,5 beträgt.

7. Thermoplastische Harzzusammensetzung nach Anspruch 1, wobei das Pfropfcopolymer (A-1) 40 bis 60 Gew.-% Kautschuk auf Acrylatbasis, 20 bis 40 Gew.-% einer aromatischen Vinylverbindung und 10 bis 20 Gew.-% einer Vinylcyanidverbindung umfasst.

8. Thermoplastische Harzzusammensetzung nach Anspruch 1, wobei das Pfropfcopolymer (A-2) 40 bis 60 Gew.-% Kautschuk auf Acrylatbasis, 25 bis 45 Gew.-% einer aromatischen Vinylverbindung und 10 bis 20 Gew.-% einer Vinylcyanidverbindung umfasst.

9. Thermoplastische Harzzusammensetzung nach Anspruch 1, wobei jedes von dem hochmolekularen aromatischen Vinylverbindung-Vinylcyanidverbindung-Copolymer (B-1) und dem niedermolekularen aromatischen Vinylverbindung-Vinylcyanidverbindung-Copolymer (B-2) 65 bis 80 Gew.-% einer aromatischen Vinylverbindung und 20 bis 35 Gew.-% einer Vinylcyanidverbindung umfasst.

10. Thermoplastische Harzzusammensetzung nach Anspruch 1, wobei das niedermolekulare aromatische Vinylverbindung-Vinylcyanidverbindung-Copolymer (B-2) umfasst
ein aromatisches Vinylverbindung-Vinylcyanidverbindung-Copolymer (B-2a) mit einem gewichtsgemittelten Molekulargewicht von 80.000 bis 110.000 g/mol; oder
ein aromatisches Vinylverbindung-Vinylcyanidverbindung-Copolymer (B-2c) mit einem gewichtsgemittelten Molekulargewicht von mehr als 110.000 g/mol und weniger als 160.000 g/mol.

11. Thermoplastische Harzzusammensetzung nach Anspruch 1, wobei die thermoplastische Harzzusammensetzung eine Kapillarviskosität von 2.500 bis 3.200 Pa · s, gemessen bei 190 °C in einem Scherbereich von 100/s mit einem Kapillarrheometer, aufweist.

12. Thermoplastische Harzzusammensetzung nach Anspruch 1, wobei die thermoplastische Harzzusammensetzung einen Speichermodul (Geometrie: 25 mm parallele Platte) von 70.000 bis 150.000 MPa, gemessen unter Bedingungen einer Temperatur von 190 °C, einer Dehnung von 0,1 % und einer Frequenz von 10 rad/s, aufweist.

13. Thermoplastische Harzzusammensetzung nach Anspruch 1, wobei die thermoplastische Harzzusammensetzung eine Schiefe Rsk (200 °C) von 0 bis 0,5 und eine Schiefe Rsk (220 °C) von 0,65 bis 1,35, gemessen mit einem optischen Profilersystem unter den Bedingungen, wie in [0195] der Beschreibung offenbart, aufweist.

14. Thermoplastische Harzzusammensetzung nach Anspruch 1, wobei die thermoplastische Harzzusammensetzung eine matte thermoplastische Harzzusammensetzung mit einem Filmglanz von 15 oder weniger, gemessen bei 60 °C unter Verwendung eines Glanzmessgeräts, ist.

15. Formkörper, umfassend die thermoplastische Harzzusammensetzung nach einem der Ansprüche 1 bis 14.

## Revendications

1. Composition de résine thermoplastique, comprenant :
10 à 70 % en poids d'un copolymère greffé (A) comprenant un copolymère greffé de composé de cyanure de vinyle-composé de vinyle aromatique-acrylate (A-1) contenant un caoutchouc d'acrylate ayant un diamètre de particule moyen de 50 à 150 nm et un copolymère greffé de composé de cyanure de vinyle-composé de vinyle aromatique-acrylate (A-2) contenant un caoutchouc d'acrylate ayant un diamètre de particule moyen de 300 à 600 nm ; et
30 à 90 % en poids d'un copolymère non greffé (B) comprenant un copolymère de composé de vinyle aromatique-composé de cyanure de vinyle de poids moléculaire élevé (B-1) ayant un poids moléculaire moyen en poids de 160 000 à 200 000 g/mol, dans laquelle le composé de vinyle aromatique du copolymère de composé de vinyle aromatique-composé de cyanure de vinyle de poids moléculaire élevé (B-1) inclut un styrène ; et un copolymère de composé de vinyle aromatique-composé de cyanure de vinyle de faible poids moléculaire (B-2) ayant un poids moléculaire moyen en poids égal ou supérieur à 80 000 g/mol et inférieur à 160 000 g/mol, dans laquelle le composé de vinyle aromatique du copolymère de composé de vinyle aromatique-composé de cyanure de vinyle de faible poids moléculaire (B-2) inclut un styrène ;
dans laquelle, quand la vitesse d'extrusion est changée de 20 à 60 tr/mn dans des conditions de température de cylindre de 190°C et de température de filière de 200°C, un gradient de pression de la composition de résine thermoplastique appliqué à une extrudeuse à vis unique pour le moulage de feuilles est égal ou inférieur à 130 ;
dans laquelle le diamètre de particule moyen est mesuré par diffusion dynamique de la lumière ; et
dans laquelle le poids moléculaire moyen en poids peut être mesuré par chromatographie par perméation de gel en utilisant un tétrahydrofurane (THF) comme éluat et est obtenu en valeur relative à une norme de polystyrène (PS).

2. Composition de résine thermoplastique selon la revendication 1, dans laquelle, quand la composition de résine thermoplastique est déchargée à travers une filière en T pendant 1 minute et 30 secondes dans des conditions de température de cylindre de 190°C, de température de filière de 200°C et de vitesse d'extrusion de 50 tr/mn, un taux de décharge calculé sur la base d'une quantité de décharge de la composition de résine thermoplastique est égal ou supérieur à 18 g/mn.

3. Composition de résine thermoplastique selon la revendication 1, dans laquelle, sur la base de 100 parties en poids total du copolymère greffé de composé de cyanure de vinyle-composé de vinyle aromatique-acrylate (A) et du copolymère non greffé (B), la composition de résine thermoplastique comprend 0,1 à 10 parties en poids d'une résine de polyamide.

4. Composition de résine thermoplastique selon la revendication 1, dans laquelle, sur la base de 100 parties en poids total du copolymère greffé de composé de cyanure de vinyle-composé de vinyle aromatique-acrylate (A) et du copolymère non greffé (B), la composition de résine thermoplastique comprend 0,1 à 5 parties en poids d'un pigment inorganique.

5. Composition de résine thermoplastique selon la revendication 1, dans laquelle la composition de résine thermoplastique ne comprend pas de résine thermoplastique ayant une température de transition vitreuse égale ou supérieure à 125°C.

6. Composition de résine thermoplastique selon la revendication 1, dans laquelle un rapport en poids du copolymère greffé (A-1) au copolymère greffé (A-2) est 1:1,2 à 1:2,5.

7. Composition de résine thermoplastique selon la revendication 1, dans laquelle le copolymère greffé (A-1) comprend 40 à 60 % en poids de caoutchouc à base d'acrylate, 20 à 40 % en poids d'un composé de vinyle aromatique et 10 à 20 % en poids d'un composé de cyanure de vinyle.

8. Composition de résine thermoplastique selon la revendication 1, dans laquelle le copolymère greffé (A-2) comprend 40 à 60 % en poids de caoutchouc à base d'acrylate, 25 à 45 % en poids d'un composé de vinyle aromatique et 10 à 20 % en poids d'un composé de cyanure de vinyle.

9. Composition de résine thermoplastique selon la revendication 1, dans laquelle le copolymère de composé de vinyle aromatique-composé de cyanure de vinyle de poids moléculaire élevé (B-1) et le copolymère de composé de vinyle aromatique-composé de cyanure de vinyle de faible poids moléculaire (B-2) comprennent chacun 65 à 80 % en poids d'un composé de vinyle aromatique et 20 à 35 % en poids d'un composé de cyanure de vinyle.

10. Composition de résine thermoplastique selon la revendication 1, dans laquelle le copolymère de composé de vinyle aromatique-composé de cyanure de vinyle de faible poids moléculaire (B-2) comprend
un copolymère de composé de vinyle aromatique-composé de cyanure de vinyle (B-2a) ayant un poids moléculaire moyen en poids de 80 000 à 110 000 g/mol ; ou
un copolymère de composé de vinyle aromatique-composé de cyanure de vinyle (B-2c) ayant un poids moléculaire moyen en poids égal ou supérieur à 110 000 g/mol et inférieur à 160 000 g/mol.

11. Composition de résine thermoplastique selon la revendication 1, dans laquelle la composition de résine thermoplastique a une viscosité capillaire de 2500 à 3200 Pa·s, mesuré à 190°C dans une plage de cisaillement de 100/s avec un rhéomètre capillaire.

12. Composition de résine thermoplastique selon la revendication 1, dans laquelle la composition de résine thermoplastique a un module de stockage (géométrie : plaques parallèles 25 mm) de 70 000 à 150 000 MPa, mesuré dans des conditions de température de 190°C, de contrainte de 0,1 % et de fréquence de 10 rad/s.

13. Composition de résine thermoplastique selon la revendication 1, dans laquelle la composition de résine thermoplastique a une asymétrie Rsk (200°C) de 0 à 0,5 et une asymétrie Rsk (220°C) de 0,65 à 1,35 quand elle est mesurée avec un système profileur optique dans les conditions décrites dans [0195] de la description.

14. Composition de résine thermoplastique selon la revendication 1, dans laquelle la composition de résine thermoplastique est une composition de résine thermoplastique matte ayant une brillance de film égale ou inférieure à 15, mesurée à 60° en utilisant un brillancemètre.

15. Article moulé, comprenant la composition de résine thermoplastique selon l'une quelconque des revendications 1 à 14.
